# EUROPEAN PATENT APPLICATION

(11) **EP 3 288 042 A1**
(43) Date of publication of application: **28.02.2018**
(21) Application number: 16783278.1
(22) Date of filing: 22.04.2016
(51) Int. Cl.: H01C 7/02, H01C 1/01, H01C 1/012, H01C 1/142, H01C 17/065

(54) **PROTECTION ELEMENT**

(30) Priority: 24.04.2015 JP 2015089286
(71) Applicant: Littelfuse Japan G.K., Minato-ku Tokyo 105-0014 (JP)
(72) Inventor: IWAI, Masaaki, Inashiki-shi Ibaraki 300-0626 (JP); TAKIZAWA, Tsuyoshi, Inashiki-shi Ibaraki 300-0626 (JP)
(74) Representative: Murgitroyd & Company
(86) International application number: PCT/JP2016/062771
(87) International publication number: WO 2016/171257

(57) **Abstract**

The present invention relates to a protective element which comprises a layered PTC element having a first main surface and a second main surface, a first electrode that is positioned on the first main surface of the PTC element and a second electrode that is positioned on the second main surface of the PTC element, and the protective element characterized in that at least a portion of the first electrode and at least a portion of the second electrode are positioned so as to oppose each other with the PTC element being interposed therebetween, and a portion of the first main surface is exposed.

## Description

### Technical Field

The present invention relates to a protective element.

### Background Art

When an abnormality occurs in an electronic device or an electrical device such as excess current being supplied to the device or the device reaching an abnormally high temperature, various types of protective elements are used to cut the flow of electrical current to the electronic device or electrical device. These protective elements include bimetal elements, temperature fuse elements, and positive temperature coefficient (PTC) elements.

### Prior Art Documents

### Patent Documents

Patent Document 1: U.S. Patent No. 6,051,814

### Summary of the Invention

### Problem to be Solved by the Invention

When a PTC element is incorporated into a device to be protected, the PTC element is secured using caulking, a screw, or a bolt. When a PTC element is secured in this manner, constant pressure is applied to the PTC element, and the PTC element is prevented from expanding. As a result, the element may not function properly or may become damaged.

For this reason, various countermeasures have been adopted to reduce the amount of pressure applied to a PTC element. For example, a resin gasket has been arranged between a PTC element and a fastening member such as a screw to relieve pressure applied to the PTC element. PTC elements have also been secured using elastic members such as springs to relieve pressure applied to the PTC element (see, for example, Patent Document 1). Pressure applied to a PTC element can be relieved to a certain extent using these countermeasures, but they sometimes prevent a PTC element from functioning as intended. Specifically, the resistance value declines, the rated voltage declines, and the circuit-breaking responsiveness declines during operation. For example, normally, the resistance value of a PTC element is several hundred times higher at high temperatures (such as 130°C) than at room temperature. However, it only rises several number times higher when a PTC element is subjected to pressure.

Therefore, it is an object of the present invention to provide a PTC element that can be incorporated into an electronic or electrical device without impairing the intended function of the PTC element.

### Means for Solving the Problem

The present inventors conducted extensive research on this problem and came to believe that the desired rate of increase in resistance could be obtained when the temperature of a PTC element rises, even under pressure, by designing a PTC element so that a substantial amount of current does not flow through the portion of the PTC element subjected to pressure. Therefore, the present inventors studied PTC elements in which current did not flow through the portion of the PTC element subjected to pressure due to fastening. As a result, they discovered that the desired PTC element could be obtained by providing a portion on at least one main surface of the PTC element that did not have an electrode and electrically separating to a substantial degree the electrode on the main surface from the portion subjected to pressure due to fastening. The present invention is a product of this discovery.

A first aspect of the present invention provides a protective element comprising:
a layered PTC element having a first main surface and a second main surface,
a first electrode positioned on the first main surface of the PTC element, and a second electrode positioned on the second main surface of the PTC element,
the protective element characterized in that at least a portion of the first electrode and at least a portion of the second electrode are positioned so as to oppose each other with the PTC element being interposed therebetween, and
a portion of the first main surface is exposed.

A second aspect of the present invention provides an electronic or electrical device comprising this protective element.

A third aspect of the present invention provides a method for securing a protective element comprising:
a layered PTC element having a first main surface and a second main surface,
a first electrode positioned on the first main surface of the PTC element, and a second electrode positioned on the second main surface of the PTC element,
the protective element characterized in that at least a portion of the first electrode and at least a portion of the second electrode are positioned so as to oppose each other with the PTC element being interposed therebetween, and
a portion of the first main surface is exposed,
the method characterized in that the protective element is secured by pressure applied in the thickness direction of the PTC element against the exposed portion of the first main surface.

### Effect of the Invention

In the present invention, by arranging the electrode on at least one main surface of a PTC element so as to be electrically separated from the portion subjected to pressure due to fastening, the intended function of the PTC element can be realized even when the PTC element has been fastened without taking measures to relieve pressure, and the risk of damage to the PTC element can also be reduced.

### Brief Description of the Drawings

[FIG. 1] FIG. 1 (a) is a top view of the protective element 1a in an embodiment of the present invention as viewed from the first electrode 8. FIG. 1 (b) is a cross-sectional view of the protective element 1 a in the thickness direction along line x-x.
[FIG. 2] FIG. 2 is a diagram used to explain the flow of the current in a protective element of the present invention.
[FIG. 3] FIG. 3 is a cross-sectional view of the protective element 1 b in another embodiment of the present invention.
[FIG. 4] FIG. 4 is a cross-sectional view of the protective element 1c in another embodiment of the present invention.
[FIG. 5] FIG. 5 is a cross-sectional view of the protective element 1 d in another embodiment of the present invention.
[FIG. 6] FIG. 6 is a cross-sectional view of the protective element 1e in another embodiment of the present invention.
[FIG. 7] FIG. 7 (a) is a top view of the protective element 11a in an embodiment of the present invention as viewed from the first electrode 8. FIG. 7 (b) is a cross-sectional view of the protective element 11a in the thickness direction along line x-x.
[FIG. 8] FIG. 8 is a cross-sectional view showing the protective element 11a in FIG. 7 after it has been secured.
[FIG. 9] FIG. 9 (a) is a top view of the protective element 11 b in an embodiment of the present invention as viewed from the first electrode 8. FIG. 9 (b) is a cross-sectional view of the protective element 11 b in the thickness direction along line x-x.
[FIG. 10] FIG. 10 is a perspective view of the socket 31 in another embodiment of the present invention.
[FIG. 11] FIG. 11 is an exploded perspective view of the socket 31 in FIG. 10 showing the various elements separated from each other.
[FIG. 12] FIG. 12 is a perspective view of the insulating spacer 44 in the socket 31 of FIG. 10 as viewed from below.
[FIG. 13] FIG. 13 (a) through (c) are cross-sectional views of a PTC element subjected to pressure by the bolt used in the example below.

### Embodiment of the Invention

The following is a detailed explanation of the protective elements in embodiments of the present invention with reference to the drawings.

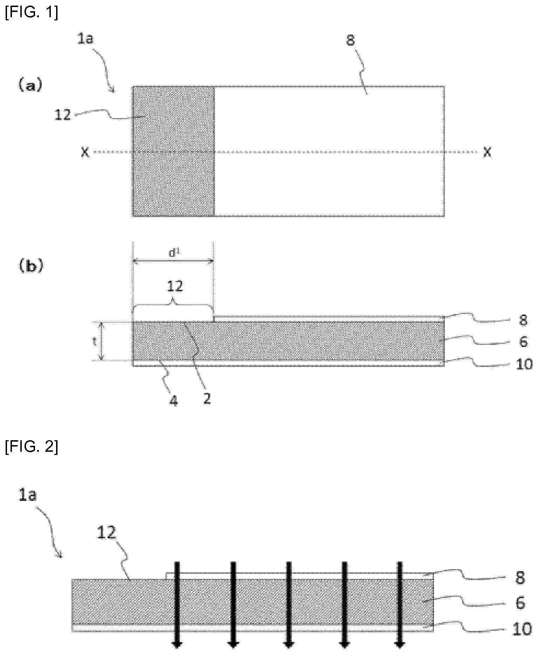

As shown schematically in FIG. 1 (a) and FIG. 1 (b), the protective element 1a in one embodiment of the present invention comprises a layered PTC element 6 having a first main surface 2 and a second main surface 4, a first electrode 8 positioned on the first main surface 2 of the PTC element 6, and a second electrode 10 positioned on the second main surface 4 of the PTC element 6. At least a portion of the first electrode 8 and the second electrode 10 are positioned so as to oppose each other via the PTC element 6. The first electrode 8 covers a portion of the first main surface 2 of the PTC element, and the first main surface 2 of the PTC element 6 has an exposed portion 12. In other words, the first main surface has a portion which is not covered by the first electrode. Note that in the present invention, the exposed portion 12 is not covered by a conductive material such as the first electrode but may be covered by an insulating material such as a protective coating.

The polymer PTC element used in the present invention is a polymer PTC element. This element is usually obtained by extruding a conductive composition composed of a conductive filler (carbon black, nickel alloy, etc.) dispersed in a polymer (polyethylene, polyvinylidene fluoride, etc.) and then cutting the extruded product to a predetermined size. In one aspect, the PTC element may be a so-called polymer PTC element having a thin laminated electrode (foil electrode) on at least one main surface. When a polymer PTC element expands under high-temperature conditions, the distance between particles of the conductive filler dispersed throughout the element increases and the resistance value rises.

There are no particular restrictions on the thickness of the PTC element 6, which can be from 0.01 to 5 mm, preferably from 0.05 mm to 3 mm, and more preferably from 0.1 mm to 1 mm.

The materials constituting the first electrode 8 and the second electrode 10 may be the same or different. There are no particular restrictions on the materials constituting the first electrode 1 and the second electrode as long as they are conductive materials. Examples include conductive metals such as nickel, stainless steel, copper, aluminum, tin, or titanium, as well as alloys of these metals.

In the present invention, the first electrode 8 and the second electrode 10 may be composed of two or more conductive material layers such as conductive metal layers.

The protective element 1 a is connected to other electrical elements via the first electrode 8 and the second electrode 10. Therefore, as indicated by the arrows in FIG. 2, the current flowing through the protective element 1 a flows between the first electrode 8 and the second electrode 10 via the portion of the PTC element interposed between the electrodes, and hardly any current reaches the portion of the PTC element corresponding to the exposed portion 12.

The protective element 1 a is mounted in a device by securing at least part of the exposed portion 12 using caulking or a screw. As a result, the exposed portion 12 is subjected to pressure so as to compress the PTC element in the thickness direction, but the portion with the first electrode 8 is not subjected to pressure.

When the protective element 1a is operating, that is, when the PTC element becomes hot and expands, the PTC element cannot expand sufficiently in the portion corresponding to the exposed portion 12 which is being subjected to pressure, but the PTC element can expand sufficiently in the portion corresponding to the first electrode 8 which is not being subjected to pressure, and the resistance value in this portion can increase significantly. Therefore, the current path between the first electrode 8 and the second electrode 10 is substantially blocked and the current flowing through the protective element 1 a is blocked. Note that a small amount of current can flow through in some situations.

In a preferred aspect, the width d¹ of the exposed portion 12 is greater than the thickness t of the PTC element 6. By expanding the width of the exposed portion 12 in this way, the distance between the first electrode 8 and the portion subjected to pressure due to fastening is greater than the distance between the first electrode 8 and the second electrode 10, and the flow of current from the first electrode 8 to the portion subjected to pressure can be reliably prevented.

In the present embodiment, the exposed portion 12 is positioned in an end portion of the PTC element. By moving the exposed portion closer to the end of the PTC element, the area of the first electrode 8 can be further expanded and the rated current of the protective element 1 a can be improved.

In the protective element of the present embodiment, the PTC element is exposed in the place where it comes into contact with a fastening member such as a screw for securing the element. Because there is no metal layer, current is less likely to flow into the fastening member and it is fastened more securely.

The present invention is not limited to the embodiments described above as various modifications are possible.

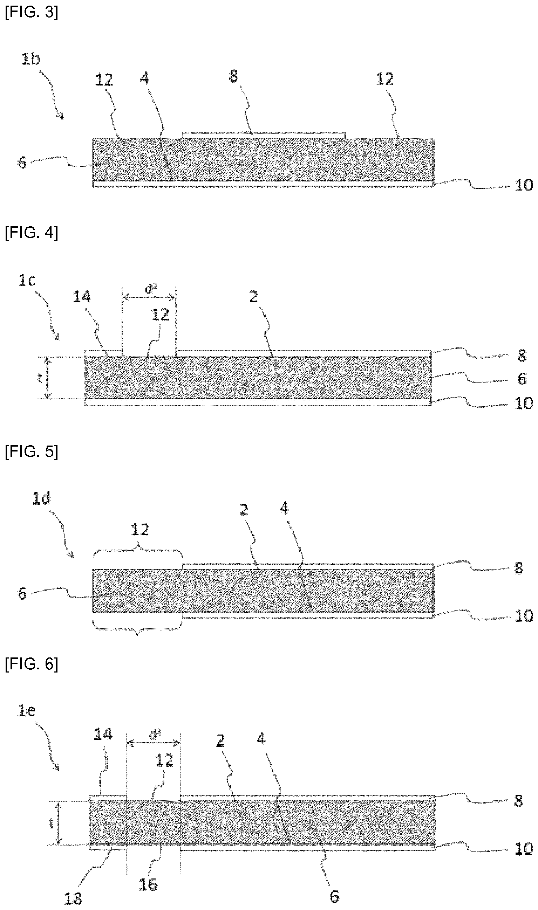

In one embodiment, as shown in FIG. 3, the protective element 1 b has an exposed portion 12 on both ends of the PTC element 6. By providing an exposed portion on both ends, the element can be fastened in two places and thus fastened more securely. The rest of the configuration in protective element 1 b is the same as that of protective element 1 a.

As shown in this embodiment, a protective element of the present invention is not limited to one exposed portion 12. It may have two or more exposed portions. There are also no particular restrictions on where this is located.

In another embodiment, as shown in FIG. 4, the protective element 1 c also has a first metal layer 14 on top of the first main surface 2. The first metal layer 14 runs along the exposed portion 12 and is separated from the first electrode 8. The protective element 1c is secured in a portion of the first metal layer 14. By providing a metal layer where the element is secured, the rigidity of the secured portion can be improved and the element can be secured more stably. The rest of protective element 1 c is similar to protective element 1 a.

There are no particular restrictions on the material constituting the first metal layer 14. It can be made of the same material as the first electrode.

In a preferred aspect, the width d² of the exposed portion 12 is greater than the thickness t of the PTC element 6. By expanding the width of the exposed portion 12 in this way, the distance between the first electrode 8 and the first metal layer 14 is greater than the distance between the first electrode 8 and the second electrode 10, and the flow of current from the first electrode 8 to the first metal layer 14 can be reliably prevented.

In one embodiment, as shown in FIG. 5, the protective element 1d has a portion 16 opposite the exposed portion 12 on the first surface 2 of the second main surface 4 that is itself exposed. By arranging exposed portions that oppose each other in the first main surface and the second main surface, the flow of current from the first electrode or the second electrode to this portion can be reliably prevented. The rest of protective element 1 d is similar to protective element 1 a.

As shown in this embodiment, if at least a portion of the second electrode in a protective element of the present invention is arranged opposite the first electrode via the PTC element, the rest may be arranged at any location on the second main surface.

In one embodiment, as shown in FIG. 6, the protective element 1e has a first metal layer 14 on the first main surface 2 and a second metal layer 18 on the second main surface 4. The first metal layer 14 and the second metal layer 18 are positioned opposite each other, running along exposed portion 12 and exposed portion 16 and remaining separated from the first electrode 8 and the second electrode 10. The protective element 1e is secured in a portion of the first metal layer 14 and the second metal layer 18. By providing metal layers where the element is secured, the rigidity of the secured portion can be improved and the element can be secured more stably. The rest of protective element 1 e is similar to protective element 1d.

There are no particular restrictions on the material constituting the second metal layer 18. It can be made of the same material as the second electrode 10.

In a preferred aspect, the width d³ of exposed portion 12 and exposed portion 16 is greater than the thickness t of the PTC element 6. By expanding the width of exposed portion 12 and exposed portion 16 in this way, the distance between the first electrode 8 and the first metal layer 14 and between the second electrode 10 and the second metal layer 18 is greater than the distance between the first electrode 8 and the second electrode 10, and the flow of current from the first electrode 8 to the first metal layer 14 or from the second electrode 10 to the second metal layer 18 can be reliably prevented.

The planar shape of the protective elements shown in FIG. 1 through FIG. 6 (the shape when viewed from the first main surface of the PTC element) is rectangular, but the present invention is not restricted to this shape. The planar shape of a protective element of the present invention can have any shape. For example, a protective element of the present invention may have an opening passing through in the thickness direction of the PTC, preferably forming a ring-shape.

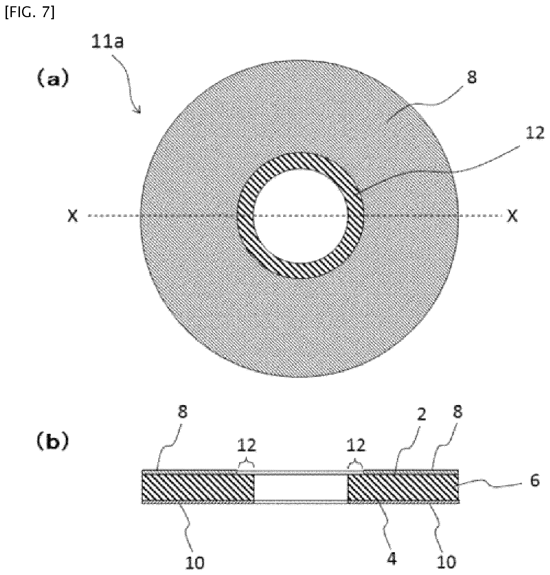

In one embodiment, as shown in FIG. 7 (a) and FIG. 7 (b), the protective element 11 a has a ring-shaped PTC element 6, first electrode 8, and second electrode 10 with an opening passing through in the thickness direction. The first electrode 8, the PTC element 6, and the second electrode 10 are stacked in order so that the center line of the round opening in the first electrode 8 and the second electrode 10 is positioned on the central axis of the opening in the PTC element 6. In other words, the round openings in the first electrode 8, the PTC element 6, and the second electrode 10 are concentric.

The inner diameter of the first electrode 8 is greater than the inner diameter of the PTC element 6 and the second electrode 10. (Here, the inner diameter is the diameter of the round opening inside the ring.) Therefore, in the protective element 11a, the first electrode 8 does not completely cover the first main surface 2 of the PTC element 6, and a portion 12 of the first main surface remains exposed in the top portion of the protective element 11 a. The inner diameter and outer diameter of the second electrode 10 are the same size as the inner diameter and outer diameter of the PTC element 6. Therefore, the second electrode 10 completely covers the second main surface 4 of the PTC element 6.

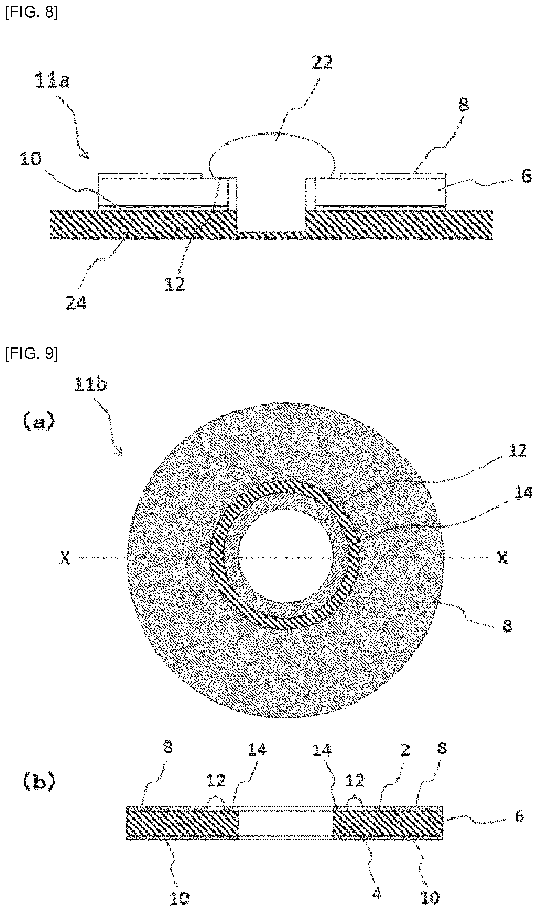

As shown in FIG. 8, the protective element 11 a can be secured to another member such as an electrical element 24 by a fastening member such as a screw (or bolt) 22. More specifically, the PTC element 6 is pressed downward in the drawing by the head of the screw 22 in the exposed portion 12 of the protective element 11 a to secure the protective element 11 a. The force used to secure the element acts only on the contact surface of PTC element 6 with the screw 22 and does not act on the rest (for example, the portion with the first electrode 8).

When the temperature of the protective element 11a rises, the PTC element 6 tries to expand. The portion in contact with the screw 22 cannot expand due to pressure from the screw 22, but the portions not subjected to pressure from the screw 22, that is, the portion with the first electrode 8, can expand. The current flowing through the protective element 11 a flows from the first electrode 8 to the second electrode 10 via the PTC element 6 (or vice versa) but does not flow into the secured portion (exposed portion 12). As a result, the PTC element in the portion interposed between the first electrode 8 and the second electrode 10 expands, substantially blocking the current flowing to the protective element 11a.

When the protective element is ring-shaped, there are no particular restrictions on the outer diameter of the PTC element 6, which may be selected depending on the intended use. Examples include from 5 mm to 100 mm, from 10 mm to 50 mm, and from 15 mm to 25 mm.

There are no particular restrictions on the inner diameter of the PTC element 6. For example, it can be from 1 mm to 10 mm, and preferably from 3 mm to 8 mm.

As in the case of protective elements 1 a through 1 e described above, many variations on protective element 11 a are possible.

In one embodiment, as shown in FIG. 9 (a) and FIG. 9 (b), the protective element 11 b has a first metal layer 14 on the first main surface 2. The first metal layer 14 is ring-shaped. The inner diameter of the first metal layer 14 is the same size as the inner diameter of the PTC element 6, but the outer diameter is smaller than the inner diameter of the first electrode 8. The first metal layer 14 is separated from the first electrode 8 by the exposed portion 12. Therefore, as shown in FIG. 9 (a), when the protective element 11b is viewed from the first electrode side, the first metal layer 14, the exposed portion 12, and the first electrode 8 are present in this order from the inside of the ring. The rest of the configuration in protective element 11 b is the same as that of protective element 11 a.

In another embodiment, an exposed portion may be provided in the second main surface of the protective element 11 a in the same manner as the protective element 1 d described above. In yet another embodiment, an exposed portion and a second metal layer may be provided in the second main surface of the protective element 11 b in the same manner as the protective element 1e described above.

In the illustrated embodiments, the shape of the outer contour and the inner contour (that is, the opening) of the PTC element is round, but combined with another shape such as an oval or a polygon (triangle, square, pentagon, etc.). The opening in the PTC element does not have to be in the center of the PTC element. It can be, for example, in the outer peripheral portion of the PTC element.

A protective element of the present invention can be produced by manufacturing the PTC element, first electrode, and second electrode separately and then bonding them together. In another method, both main surfaces of the PTC element may be completely covered by the first electrode and the second electrode, and the electrode in the place corresponding to the exposed portion may be removed using etching, sandblasting, or a cutter.

The protective element of the present invention can be mounted on an electronic device or electrical device using a screw or caulking. Compared to welding, soldering, and use of adhesives, this makes it easier to attach and detach the protective element. Also, because the connected portions do not have to be heated, components with low heat resistance can be used. As a result, the present invention can be used as a protective element in a wide variety of electronic devices and electrical devices, including cigarette lighter sockets, vacuum cleaners, and refrigerators.

In a second aspect, the present invention provides an electrical device such as a socket which includes the protective element of the present invention described above.

The following is a detailed explanation of the socket in an embodiment of the present invention with reference to the drawings.

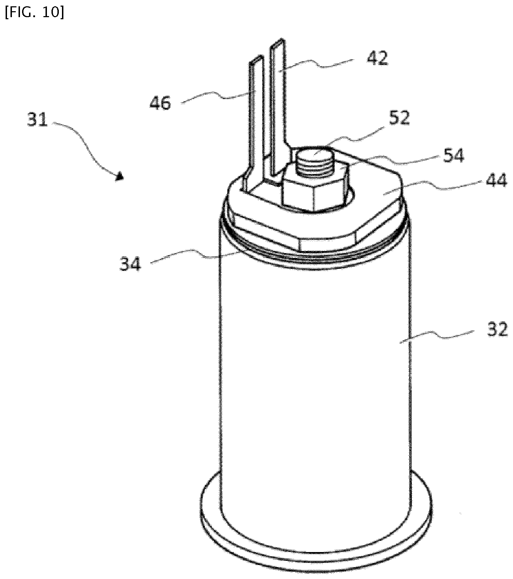

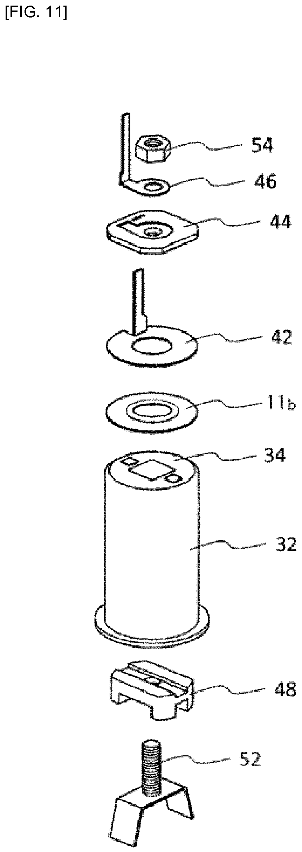

The socket 31 in the embodiment of the present invention has the structure shown in FIG. 10 and FIG. 11. Specifically, the socket 31 comprises:
a socket main body portion 32,
a protective element 11 b of the present invention provided on an outer bottom surface 34 of the socket main body portion 32 so that the second electrode 10 contacts the outer bottom surface 34,
a terminal 42 provided on the first electrode 8 of the protective element 11 b,
an insulating spacer 44 having a protruding portion 40 provided on the terminal 42 so as to be separated from the main surface of the terminal 42,
a terminal 46 provided on the insulating spacer 44, and
an insulating member 48 provided on an inner bottom surface of the socket main body portion 32,
these being secured by a bolt 52 inserted from the insulating member 48 side to the terminal 46 side so as not to make contact with the protective element 11b, and by a nut 54 positioned on terminal 46 side.

In the socket 31, the terminal 46, (nut 54), and bolt 52 are connected electrically to form a current path. When the terminal 46 is connected electrically to the positive electrode (or negative electrode) of the power supply (not shown), the bolt 52 functions as the positive electrode (or negative electrode) of the socket 31. The electrical connection between the terminal 46 and the bolt 52 can be direct or via the nut 54. Also, the terminal 42, the first electrode 8, the PTC element 6, the second electrode 10, and the socket main body portion 32 are connected electrically to form a current path. When the terminal 42 is connected to the negative electrode (or positive electrode) of the power supply, the socket main body portion 32 functions as the negative electrode (or positive electrode) of the socket 31.

There are no particular restrictions on the shape of the socket main body portion 32, which may be selected depending on the intended use.

Because the socket main body portion 32 functions as a terminal, some or all of the socket main body portion may be made of a conductive material. There are no particular restrictions on the conductive material that is used. Examples include nickel, stainless steel, iron, copper, aluminum, tin, titanium, and alloys of these metals.

The terminal 42 may have any shape that allows it to be connected to other electrical elements such as the power supply. In the present embodiment, the terminal 42 is connected electrically to the first electrode 8 in the protective element 11 b. The terminal 42 is preferably connected to the first electrode 8 using a conductive adhesive or solder.

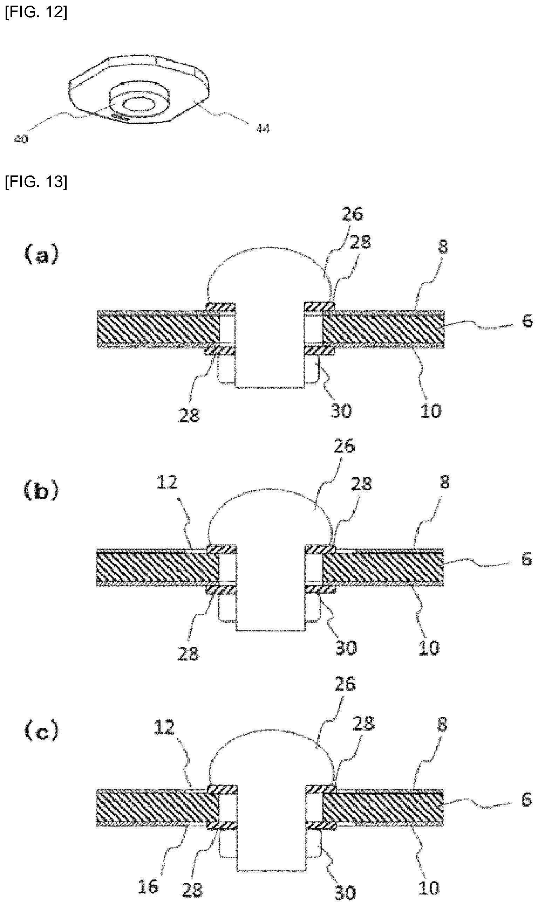

The insulating spacer 44 is used to electrically separate the protective element 11 b from the terminal 46. The insulating spacer 44 has a protruding portion 40 on the bottom surface (FIG. 12), and the protruding portion passes through the opening in the terminal 42, reaches the first metal layer 14, and secures the protective element 11 b by pressing down on the first metal layer 14.

The insulating spacer 44 is held by the protruding portion 40, and the bottom surface portion of the insulating spacer 44 is separated from the terminal 42. Therefore, the height of the protruding portion 40 of the insulating spacer 44 is greater than the total thickness of the terminal 42. The difference between the height of the protruding portion of the insulating spacer 44 and the thickness of the terminal 42 has to be greater than the increased thickness of the PTC element 6 when tripped, so 10 µm or more is acceptable, 100 µm or more is preferred, and 500 µm or more is especially preferred.

There are no particular restrictions on the material constituting the insulating spacer 44 as long as it is insulative. However, an insulating resin is preferred. There are no particular restrictions on the insulating resin. It can be, for example, a thermoplastic resin or a thermosetting resin. Specific examples include polyethylene, polypropylene, polycarbonate, fluorine-based resins, ABS (acrylonitrile-butadiene-styrene) resin, polycarbonate-ABS alloy resins, PBT (polybutylene terephthalate) resin, and elastomers.

The terminal 46 may have any shape that allows it to be connected to other electrical elements such as the power supply. In the present embodiment, the terminal 46 is positioned in a recess in the insulating spacer 44.

The insulating member 48 is used to electrically separate the bolt 52 from the socket main body portion 32.

There are no particular restrictions on the material constituting the insulating member 48 as long as it is insulative. However, an insulating resin is preferred. There are no particular restrictions on the insulating resin. It can be, for example, a thermoplastic resin or a thermosetting resin. Specific examples include polyethylene, polypropylene, polycarbonate, fluorine-based resins, ABS (acrylonitrile-butadiene-styrene) resin, polycarbonate-ABS alloy resins, PBT (polybutylene terephthalate) resin, and elastomers.

here are no particular restrictions on the shape of the insulating member 48 as long as it realizes its function of electrically separating the bolt 52 from the socket main body portion 32.

The bolt (screw) 52 is arranged so as not to make contact with the protective element 11 b and the socket main body portion 32. It is connected electrically to the terminal 46 directly or via the nut 54. The nut 52 functions as a terminal connected to another electrical element.

Because the bolt 52 functions as a terminal, it is made of a conductive material. There are no particular restrictions on the conductive material that is used. Examples include nickel, stainless steel, iron, copper, aluminum, tin, titanium, and alloys of these metals.

The material constituting the nut 54 is preferably a conductive material. The same material constituting the bolt 52 can be used.

A protective element of the present invention is preferably secured or mounted by applying pressure in the thickness direction of the PTC element against the exposed portion of the first main surface of the protective element.

Therefore, in a third aspect, the present invention provides a method for securing or mounting the protective element described above.

Specifically, the present invention provides a method for securing or mounting a protective element comprising:
a layered PTC element having a first main surface and a second main surface,
a first electrode positioned on the first main surface of the PTC element, and a second electrode positioned on the second main surface of the PTC element,
the protective element characterized in that at least a portion of the first electrode and at least a portion of the second electrode are positioned so as to oppose each other with the PTC element being interposed therebetween, and
a portion of the first main surface is exposed,
the protective element being secured or mounted by pressure applied in the thickness direction of the PTC element against the exposed portion of the first main surface.

In a preferred aspect, the place receiving the applied pressure is a place whose distance from the end of the first electrode is greater than the thickness of the PTC element. By applying pressure in this place, the electric current can be more reliably prevented from flowing from the first electrode to the second electrode via the place where pressure acts on the PTC element.

The present invention was explained above with reference to the drawings, but the present invention is not limited to this explanation as various modifications are possible.

### Example 1

A portion of the first electrode in a PTC element with an outer diameter of 21 mm and an inner diameter of 8.3 mm (Sample A, FIG. 13(a)) is cut away using a cutter to create a PTC element in which the inner diameter of the first electrode is 12 mm and the inner diameter of both the PTC element and the second electrode is 8.3 mm (Sample B, FIG. 13(b)).

Similarly, a portion of the first electrode and a portion of the second electrode are cut away using a cutter to create a PTC element in which the inner diameter of both the first electrode and the second electrode is 12 mm and the inner diameter of the PTC element is 8.3 mm (Sample C, FIG. 13(c)).

Samples A-C were fastened by a bolt 26 (head diameter: 8.0 mm), a washer 28 (outer diameter: 9.9 mm), and a hexagonal nut 30 (diagonal distance: 8.1 mm; width between surfaces: 7.0 mm) as shown in FIG. 13 (fastening torque: 1 kgf), and the temperature-resistance characteristics of each sample were measured. For control purposes, the temperature-resistance characteristics of Sample A and Sample B were measured before being fastened. The resistance values of each sample before (25°C) and after (175°C) tripping are shown in the following table.

**[Table 1]**

| Fastened | Sample | Resistance Value (Ω) | | Resistance Ratio (175°C/20°C) |
|---|---|---|---|---|
| | | 20°C | 175°C | |
| No | Sample A | 9.25 x 10⁻³ | 2.18 x 10² | 2.4 x 10⁴ |
| | Sample B | 8.80 x 10⁻³ | 5.72 x 10² | 6.5 x 10⁴ |
| Yes | Sample A | 8.97 x 10⁻³ | 3.65 x 10⁻¹ | 2.9 x 10¹ |
| | Sample B | 8.60 x 10⁻³ | 3.17 x 10² | 3.6 x 10⁴ |
| | Sample C | 1.03 x 10⁻² | 2.78 x 10² | 8.5 x 10³ |

From these results it is clear that, compared to Sample B and Sample C, Sample A experiences a much smaller rise in resistance value during tripping. Because the electrodes in Sample A are covered by both main surfaces of the PTC element and fastened on top of the electrodes by a bolt, the electrodes are believed to inhibit expansion of the PTC element. Because at least one electrode in Sample B and Sample C is separate from the applied-pressure portion, this is believed not to inhibit expansion of the PTC element, resulting in a resistance value similar to the original.

### Industrial Applicability

A protective element of the present invention can be mounted on a wide variety of terminals or electrical devices using a screw or caulking in order to serve as an all-purpose protective element for the terminal or electrical device.

### Key to the Drawings

1 a-1 e: Protective element
2: First main surface
4: Second main surface
6: PTC element
8: First electrode
10: Second electrode
11a, 11b: Protective element
12: Exposed portion
14: First metal layer
16: Exposed portion
18: Second metal layer
22: Screw
24: Electrical element
26: Bolt
28: Washer
30: Nut
31: Socket
32: Socket main body portion
34: Outer bottom surface
40: Protruding portion
42: Terminal
44: Insulating spacer
46: Terminal
48: Insulating member
52: Bolt
54: Nut

## Claims

1. A protective element comprising:
a layered PTC element having a first main surface and a second main surface,
a first electrode positioned on the first main surface of the PTC element, and a second electrode positioned on the second main surface of the PTC element,
the protective element **characterized in that** at least a portion of the first electrode and at least a portion of the second electrode are positioned so as to oppose each other with the PTC element being interposed therebetween, and
a portion of the first main surface is exposed.

2. A protective element according to claim 1, wherein a portion of the second main surface opposite the exposed portion of the first main surface is exposed.

3. A protective element according to claim 1 or 2, further comprising a first metal layer on the first main surface, the metal layer being separated from the first electrode.

4. A protective element according to claim 3, wherein the distance from the first electrode to the first metal layer is greater than the thickness of the PTC element.

5. A protective element according to any of claims 1 through 4, further comprising a second metal layer on the second main surface, the metal layer being separated from the second electrode.

6. A protective element according to claim 5, wherein the distance from the second electrode to the second metal layer is greater than the thickness of the PTC element.

7. A protective element according to any of claims 1 through 6, wherein the exposed portion of the first main surface is positioned in an end area of the PTC element.

8. A protective element according to any of claims 1 through 6, wherein the first metal layer is positioned in an end area of the PTC element, and the exposed portion of the first main surface is positioned along the first metal layer.

9. A protective element according to any of claims 1 through 8, wherein the PTC element, the first electrode, and the second electrode have an opening.

10. A protective element according to any of claims 1 through 9, wherein the PTC element, the first electrode, and the second electrode are ring-shaped.

11. A protective element according to claim 10, wherein the exposed portion of the first main surface is positioned along an inner edge portion of the PTC element.

12. A protective element according to claim 10, wherein the first metal layer is positioned along an inner edge portion of the PTC element, and the exposed portion of the first main surface is positioned along the first metal layer.

13. An electrical device having a protective element according to any of claims 1 through 12.

14. A secondary battery cell having a protective element according to any of claims 1 through 12.

15. A socket comprising a protective element according to any of claims 1 through 12.

16. A socket according to claim 15 **characterized in** comprising:
a socket main body portion,
a protective element according to any of claims 1 through 12 provided on an outer bottom surface of the socket main body portion so that the second electrode contacts the outer bottom surface,
a terminal provided on the first electrode of the protective element,
an insulating spacer having a protruding portion provided on the terminal so as to be separated from the main surface of the terminal,
another terminal provided on the insulating spacer, and
an insulating member provided on an inner bottom surface of the socket main body portion,
these being secured by a bolt inserted from the insulating member side to the other terminal side so as not to make contact with the protective element, and by a nut positioned on other terminal side.

17. A method for securing a protective element comprising:
a layered PTC element having a first main surface and a second main surface,
a first electrode positioned on the first main surface of the PTC element, and a second electrode positioned on the second main surface of the PTC element,
the protective element **characterized in that** at least a portion of the first electrode and at least a portion of the second electrode are positioned so as to oppose each other with the PTC element being interposed therebetween, and
a portion of the first main surface is exposed,
the method **characterized in that** the protective element is secured by pressure applied in the thickness direction of the PTC element against the exposed portion of the first main surface.

18. A method according to claim 17, wherein the place receiving the applied pressure is a place whose distance from the end of the first electrode is greater than the thickness of the PTC element.
